# EUROPEAN PATENT APPLICATION

(11) **EP 0 634 304 A1**
(43) Date of publication of application: **18.01.1995**
(21) Application number: 94305094.8
(22) Date of filing: 12.07.1994
(51) Int. Cl.: B60P 1/64

(54) **Method and arrangement for lifting containers onto and from vehicles**

(30) Priority: 13.07.1993 AU PL9896/93
(71) Applicant: Tomkins, Colin, Scoresby VIC 3179 (AU); Pinjo, Hassan, Scoresby VIC 3179 (AU)
(72) Inventor: Tomkins, Colin, Scoresby VIC 3179 (AU); Pinjo, Hassan, Scoresby VIC 3179 (AU)
(74) Representative: Sherrard-Smith, Hugh

(57) **Abstract**

Method of loading or unloading a container onto a vehicle being a truck (1), a trailer of a semi-trailer or a trailer having wheels, a support bed for a container (41) and a front end and rear end which comprises utilising a lifter mounted to the vehicle to lift one end of a container resting on the ground, relatively moving the rear end of the vehicle and said one end towards one another so that said one end locates above said rear end and drawing the container over said rear end and onto the support bed.

## Description

### FIELD OF THE INVENTION

This invention relates to transporting.

In particular aspects, this invention relates to methods and apparatus for transporting containers.

### BACKGROUND TO THE INVENTION

The use of containers of a standard size for transporting goods has become so common that ships, wharves, cranes, lifters, fork lifters and other apparatus have been specifically designed and built for the purpose of handling such containers.

However, many problems remain particularly at sites or in situations where a small number of containers are dealt with as compared with situations in which a large number of containers are dealt with.

Thus, a wharf may well be able to afford and effectively use an overhead lifter costing many millions of dollars for the purpose of lifting containers off, and placing containers on, trucks but a small business can not afford such a lifter or even have the space in which to install such a lifter.

Next, fork lifters are available but need to work from a side of a truck but not all businesses can afford such a fork lift or have the land space to enable such a fork lifter to work.

Further, even in places where substantial lifters are available, trucks still need to wait in turn and queue to have containers loaded and unloaded from them.

The applicant believes that substantial improvements in transporting can be obtained.

### SUMMARY OF THE INVENTION

The present invention provides:-
a method of loading a container onto a vehicle being a truck, a trailer of a semi-trailer or a trailer which vehicle having wheels, a support bed for a container and a front end and rear end which comprises utilising a lifter mounted to the vehicle to lift one end of a container resting on the ground or other substrate, relatively moving the rear end of the vehicle and said one end towards one another so that said one end locates above said rear end and drawing the container over said rear end and onto the support bed.

The present invention also provides:-
a method of unloading a container from a vehicle being a truck, a trailer of a semi-trailer or a trailer which vehicle having wheels, a support bed for a container and a front end and a rear end which comprises utilising a lifter mounted to the vehicle to lift one end of a container located on the support bed, relatively moving the rear end of said vehicle and said one end towards one another so that the other end of the container becomes to rest on the ground or other substrate, relatively moving the rear end of the vehicle and the container away from one another so that said one end is located rearwardly of said rear end and lowering said one end to the ground or other substrate.

The present invention also provides:-
apparatus for loading a container onto a vehicle being a truck, a trailer of a semi-trailer or a trailer which vehicle having wheels, a support bed for a container and a front end and a rear end, the apparatus comprising a lifter adapted to be mounted to the vehicle for lifting one end of a container resting on the ground or other substrate whereby, on relative movement of the rear end of the vehicle and said one end towards one another to being said one end, to locate above said rear end and adapted to draw the container over said rear end and onto the support bed.

The present invention also provides:-
apparatus for unloading a container from a vehicle being a truck, a trailer of a semi-trailer or a trailer which vehicle having wheels, a support bed for a container and a front end and a rear end, the apparatus comprising a lifter adapted to be mounted to the vehicle for lifting one end of a container located on the support bed whereby, on relative movement to the rear end of said vehicle and said one end towards one another, to bring the other end of the container to rest on the ground or other substrate and adapted after relative movement of the rear end of the vehicle and the container away from one another so that said one end is located rearwardly of said rear and to lower said one end to the ground or other substrate.

The present invention also provides:-
a combination of such apparatus with such a vehicle.

### PREFERRED ASPECTS OF THE INVENTION

The apparatus preferably comprises means for connecting to the upper end of a container, first telescopic means for moving the means for connecting upwards, second telescopic means connected to the first telescopic means and adapted to telescope in a direction generally at right angles to the direction of telescoping of the first telescopic means and wherein the second telescopic means is adapted to be mounted to said vehicle for pivoting movement for and aft of the vehicle about an axis extending transversely of the vehicle.

In a particularly preferred aspect the apparatus comprises mounting means for mounting one end of the second telescopic means to the vehicle.

The first telescopic means is preferably located at the other end of the second telescopic means.

The means for connecting preferably comprises twist locks which are known.

The vehicle is preferably provided with a roller or a skid plate at the rear end.

If a skid plate is provided it is preferred that it can tilt about an axis generally transverse of the vehicle.

A specific construction of a vehicle in accordance with this invention will now be described by way of example with reference to the accompanying drawings.

### BRIEF DESCRIPTION OF THE VIEWS OF THE DRAWINGS

Figure 1 is a first side elevational view of the vehicle,
Figure 2 is a second side elevational view of the vehicle,
Figure 3 is a third side elevational view of the vehicle,
Figure 4 is a fourth side elevational view of the vehicle,
Figure 5 is a plan view of part of the vehicle,
Figure 6 is an exploded view of apparatus,
Figure 7 is a side elevational view of another vehicle,
Figure 8 is another side elevational view of said another vehicle,
Figure 9 is a rear view of said another vehicle, and
Figure 10 is a cross-sectional view on line x-x in Figure 7.

### INTEGER LIST

- 1.: Truck
- 2.: Chassis
- 3.: Front wheels
- 4.: Rear wheels
- 6.: Apparatus
- 7.: Longitudinal framing
- 8.: Cross bars
- 9.: Main arm
- 11.: Pivot bush
- 21.: Pivots
- 22.: Rams
- 23.: Pins
- 24.: Pins
- 26.: First mast
- 27.: Secondary arm
- 28.: Second mast
- 29.: Yard arm
- 31.: Extendable rams
- 32.: Arms
- 33.: Pins
- 34.: Skid Plate
- 36.: Pivots
- 37.: Bottom locking clamps
- 41.: Container
- 42.: Corners
- 43.: Holes
- 46.: Arrow
- 47.: Arrow
- 48.: Arrow
- 49.: Arrow
- 51.: Arrow
- 52.: Arrow
- 53.: Arrow
- 54.: Arrow
- 54.: Truck
- 61.: Chassis supports
- 63.: Roller
- 67.: Bottom locking clamps

### DETAILED DESCRIPTION WITH RESPECT TO THE DRAWINGS

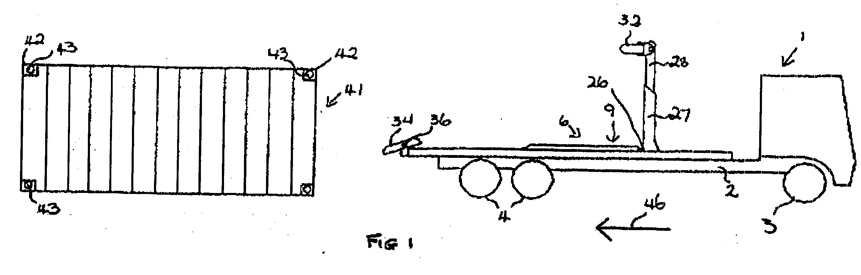

In Figures 1 - 6 of the drawings there is shown a truck 1 which has a chassis 2 and front wheels 3 and rear wheels 4 mounted to the chassis 2.

Also mounted to the chassis 2 is an apparatus 6 in accordance with the present invention.

The apparatus 6 comprises longitudinal framing members 7 which are secured together by cross-bars 8.

A main arm 9 has a pivot bush 11 by means of which the main arm 9 is made pivotable on the apparatus 6 by means of pivots 21 secured to the longitudinal framing 7.

Rams 22 extend between pins 23 secured to the main arm 9 and pins 24 secured to the longitudinal framing 7.

Within the main arm 9 is an hydraulically extendable and retractable first mast 26.

At its end from the main arm 9 the first mast 26 carries a secondary arm 27 which extends approximately at right angles to the first mast 26.

Within the secondary arm 27 an hydraulically extendable and retractable second mast 28.

On the end of the second mast 28 is a yard arm 29 which at its ends carries extendable rams 31 which can extend and retract from the yard arm 29 by hydraulic means.

The rams 31 carry arms 32 which in turn carry pins 33.

The apparatus 6 further comprises a skid plate 34 which is pivotally mounted to the longitudinal framing 7 by means of pivots 36.

Bottom locking clamps 37 are provided for engagement with a container to hold the container to the truck in the event of an accident. The bottom locking clamps 37 are of a type well known in the transport industry.

The apparatus 6 can extend, move and retract in a manner which will be hereinafter described with respect to the drawings.

Reference is firstly made to Figure 1 which shows the truck 1 adjacent to a container 41.

The container 41 is of conventional ISO Standard Form and has corners 42 provided with holes 43 which can be used for lifting the container or for holding the container down as is conventionally done in the Container Transport and Handling Industry.

With a view to loading the container 41 onto the truck 1 the truck is first reversed towards the container as shown by the arrow 46 in Figure 1.

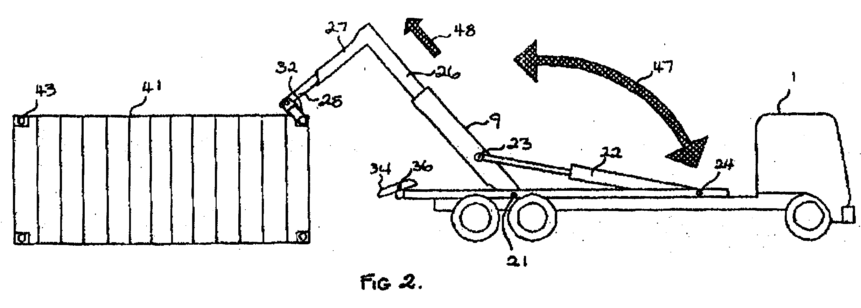

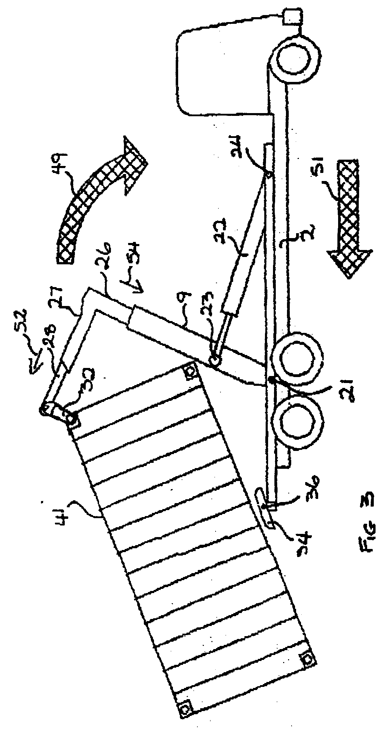

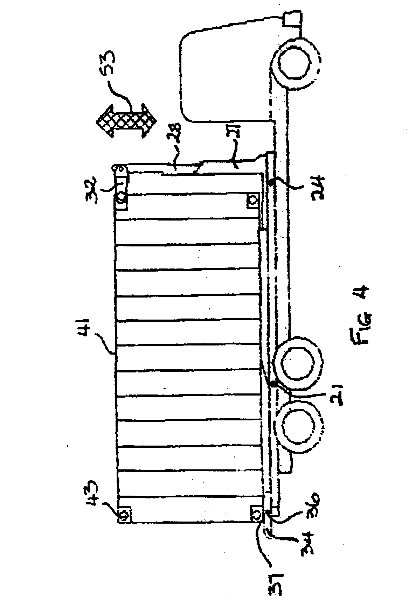

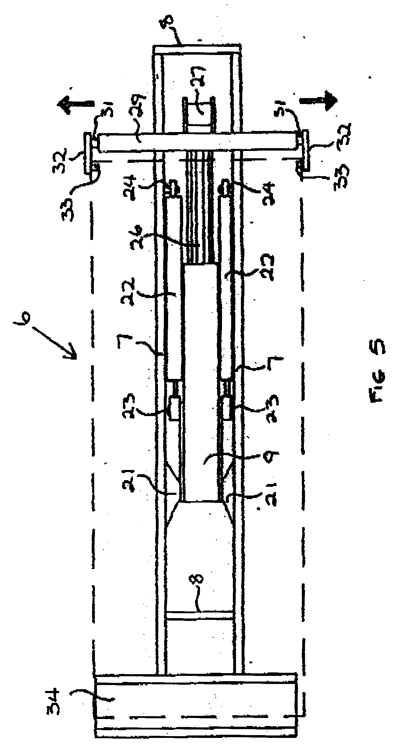

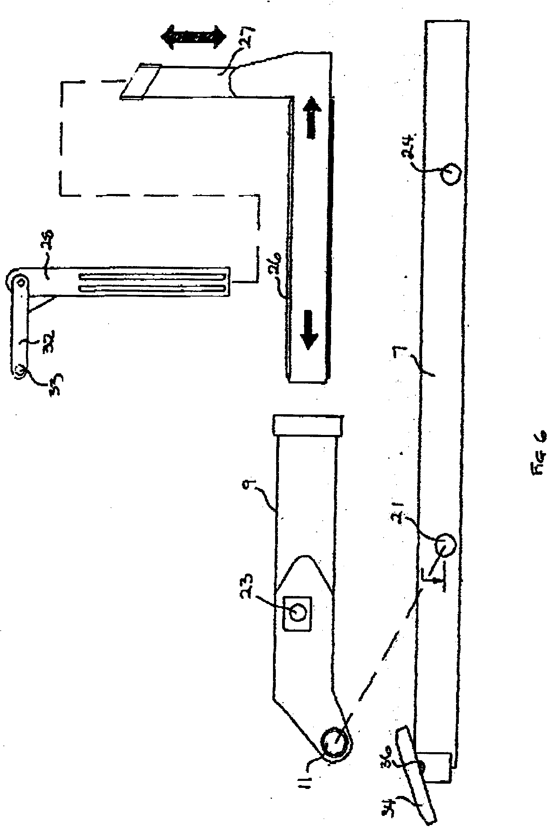

Reference is now made to Figure 2.

When the truck 1 is sufficiently close to the container 41 as shown in Figure 2 the rams 22 are extended and cause the main arm 9 to pivot in the direction of arrow 47 to take up the position shown in Figure 2.

At the same time or subsequently, the first mast 26 is extended as indicated by the arrow 48 until the arms 32 are in the correct relationship with certain of the holes 42 in the container 41.

When that relationship exists, the extendable rams 31 are retracted to cause the pins 33 to enter the selected holes 43.

The rams 22 are then retracted so that the main arm 9 moves in the opposite direction to arrow 47 and in so doing the end of the container nearest to the truck 1 will be lifted to above the skid plate 34 and when this has been achieved the first mast 26 can be retracted in opposite direction to arrow 48 so that the container 41 will come to rest on the skid plate 34 with its other end still on the ground.

Continued movement of the rams 22 to cause the main arm 9 to move in the direction of arrow 49 will continue to draw the container 41 over the skid plate 34 onto the truck and as this is done the first mast 26 is retracted into the main arm 9 and further the second mast 28 is extended as shown by arrow 52.

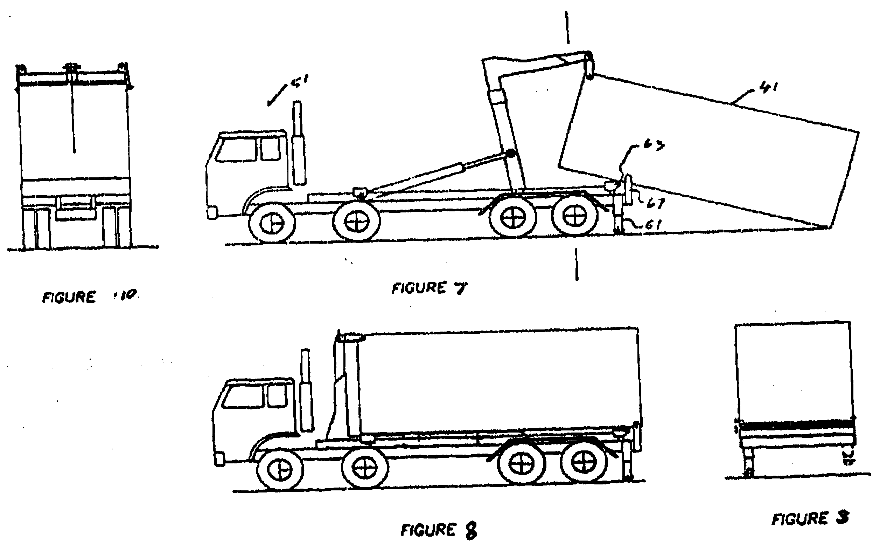

Further assistance to the loading of the container 41 is had by reversing the truck 1 in the direction of the arrow 51 as shown in Figure 3 although it should be noted that to a certain extent the actual loading of the container will in fact draw the truck under the container 41 without the need to apply power.

Reference is now made to Figure 4.

As the container in progressing from the state shown in Figure 1 to that shown in Figure 4 commences more and more to transfer its weight to the truck 1 and would be liable to topple, the extension of the second mast 28 in the direction of arrow 52 shown in Figure 3 will resist this and will enable the container to be fully drawn onto the truck to take up the position shown in Figure 4 and when that has been completed the second mast 28 should be retracted in the direction of arrow 53 to lower the container 41 onto the truck 1.

Having loaded the container 41 onto the truck 1 the bottom locking clamps 37 may be engaged to secure the container to the truck.

The truck may then be driven to another place where the container is to be unloaded and unloading is substantially the reverse of the procedure described above.

More specifically, reference is made to Figure 4 and it is to be noted that in the unloading process the second mast 28 is first moved upwards in the direction of arrow 53 in Figure 4 to raise the forward end of the container 41.

The rams 22 are extended and will move the container backwards on the truck over the skid plate 34 and during which movement the first mast 26 will be moved in opposite direction to arrow 54 and the second mast 28 will be moved in opposite direction to arrow 52 in Figure 3 while the truck will move forward in opposite direction to arrow 51 in Figure 3.

When the container 41 is sufficiently off the truck as generally shown in Figure 2 the first mast 26 can be retracted in opposite direction to arrow 48 in Figure 2 to lower the container 41 fully to the ground.

The extendable rams 31 can then be extended to release the pins 33 from holes 43 in the container 41 and thereafter the first mast 26 can be retracted into the main arm 9 and the rams 22 can be operated to cause the main arm 9 to return to the position shown in Figure 1.

Reference is now made to Figures 7 - 10 which show a truck 51 which is similar to the truck 1 but which differs therefrom but in lieu of the skid plate 34 there is provided a roller 63, chassis supports 61 which are hydraulically extendable are provided and bottom locking clamps 67 are provided.

The above described truck is very useful at loading and unloading containers particularly in areas where no side access is possible and it is believed that trucks so equipped will materially shorten loading and unloading times and substantially reduce the man power that is required.

The claims, illustrations, photographs and drawings form part of the disclosure of this specification as does the description, claims, illustrations, photographs and drawings of any associated provisional or parent specification or of any priority document all of which are imported hereinto as part of the record thereof.

Finally it is to be understood that various alterations, modifications and/or additions may be incorporated into the various constructions and arrangements or parts without departing from the spirit and ambit of the invention.

## Claims

1. A method of loading a container onto a vehicle being a truck, a trailer of a semi-trailer or a trailer which vehicle having wheels, a support bed for a container and a front end and rear end which comprises utilising a lifter mounted to the vehicle to lift one end of a container resting on the ground or other substrate, relatively moving the rear end of the vehicle and said one end towards one another so that said one end locates above said rear end and drawing the container over said rear end and onto the support bed.

2. A method of unloading a container from a vehicle being a truck, a trailer of a semi-trailer or a trailer which vehicle having wheels, a support bed for a container and a front end and rear end which comprises utilising a lifter mounted to the vehicle to lift one end of a container located on the support bed, relatively moving the rear end of said vehicle and said one end towards one another so that the other end of the container becomes to rest on the ground or other substrate, relatively moving the rear end of the vehicle and the container away from one another so that said one end is located rearwardly of said rear end and lowering said one end to the ground or other substrate.

3. Apparatus for loading a container onto a vehicle being a truck, a trailer of a semi-trailer or a trailer which vehicle having wheels, a support bed for a container and a front end and a rear end, the apparatus comprising a lifter adapted to be mounted to the vehicle for lifting one end of a container resting on the ground or other substrate whereby, on relative movement of the rear end of the vehicle and said one end towards one another to being said one end, to locate above said rear end and adapted to draw the container over said rear end and onto the support bed.

4. Apparatus for unloading a container from a vehicle being a truck, a trailer of a semi-trailer or a trailer which vehicle having wheels, a support bed for a container and a front end and a rear end, the apparatus comprising a lifter adapted to be mounted to the vehicle for lifting one end of a container located on the support bed whereby, on relative movement to the rear end of said vehicle and said one end towards one another, to bring the other end of the container to rest on the ground or other substrate and adapted after relative movement of the rear end of the vehicle and the container away from one another so that said one end is located rearwardly of said rear and to lower said one end to the ground or other substrate.

5. Apparatus as claimed in Claim 3 comprising means for connecting to the upper end of a container, first telescopic means for moving the means for connecting upwards, second telescopic means connected to the first telescopic means and adapted to telescope in a direction generally at right angles to the direction of telescoping of the first telescopic means and wherein the second telescopic means is adapted to be mounted to said vehicle for pivoting movement for and aft of the vehicle about an axis extending transversely of the vehicle.

6. Apparatus as claimed in Claim 5, wherein mounting means is provided for mounting one end of the second telescopic means to the vehicle.

7. Apparatus as claimed in Claim 5, wherein the first telescopic means is located at the other end of the second telescopic means.

8. Apparatus as claimed in Claim 5 wherein, the means for connecting comprises locks which are known.

9. Apparatus as claimed in claim 5 wherein, the vehicle is provided with a roller or a skid plate at the rear end.

10. Apparatus as claimed in Claim 8 wherein, if a skid plate is provided it is preferred that it can tilt about an axis generally transverse of the vehicle.

11. Apparatus for loading a container on to a vehicle substantially as hereinbefore described with reference to any one of the accompanying drawings.

12. The steps, features, compositions and compounds referred to or indicated in the specification and/or claims of this application, individually or collectively, and any and all combinations or any two or more of said steps or features.
